# EUROPEAN PATENT SPECIFICATION

(11) **EP 0 505 431 B1**
(45) Date of publication and mention of the grant of the patent: **05.06.1996**
(21) Application number: 91900991.0
(22) Date of filing: 26.11.1990
(51) Int. Cl.: G05B 9/02, B25J 19/06

(54) **PROTECTION DEVICE IN AUTOMATIC PRODUCTION EQUIPMENTS**
SCHUTZEINRICHTUNG FÜR AUTOMATISCHE HERSTELLUNGSVORRICHTUNG
DISPOSITIF DE PROTECTION POUR MATERIEL DE FABRICATION AUTOMATIQUE

(30) Priority: 13.12.1989 SE 8904216
(43) Date of publication of application: 30.09.1992
(73) Proprietor: LINGER, Mats, S-439 00 Onsala (SE); OLSSON, Torgny, S-233 00 Svedala (SE); WIDELL, Gunnar, S-223 78 Lund (SE)
(72) Inventor: OLSSON, Torgny, S-233 00 Svedala (SE); WIDELL, Gunnar, S-223 78 Lund (SE)
(74) Representative: Roth, Ernst Adolf Michael
(86) International application number: SE9000775
(87) International publication number: WO9109354

(56) References cited:
- Proceedings 14th International Symposium on Industrial Robots 2-4 October 1984 IFS (Publications) LTD and North-Holland Bedford, UK, Amsterdam, NL, M. Linger: "How to design safety system for human protection in robot applications", p. 119-129

## Description

The present invention refers to a method and protection devices to supervise stages at industrial production carried out by automatic equipment at a protected working station, whereby at least one stage is performed at a very low velocity with small accidental risks for a person present in the working area of the equipment, as known from the Proceedings 14 th International Symposium on Industrial Robots, 2-4 October 1984, IFS (Publications) LTD and North-Holland, Bedford UK, Amsterdam NL, pp.119-129.

### Background of the invention

Automatically operating production units, such as computer controlled robots have to be surrounded by a production adapted protection system which meets production demands, as well as maintenance demands and safety demands. With computerized production systems one might be deluded that the machine has stopped, when it in fact is in a waiting position or a pause is introduced in the program. This has resulted in several severe accidents.

One of the reasons of why such accidents occur is the difficulties after an emergency stop simply and rapidly be able to start the production again, that is one hesitates to stop the system in the hope of that nothing happens. If it is more dangerous to restart than to work without stopping the production, or if it may take an hour or more to get the production started again, or if a stop particularly results in the destruction of the product this of course contributes to the hesitation to stop the production. Therefore a number of stop function levels have been introduced, whereby the first level defines a production stop, which means that the production is stopped only when a certain operation stage is terminated, eg. a welding is ready. In the program of the robot is written when production stops are allowed, that is where stops may occur without risks of damages on the machine or product. The second stop function level is a protection stop, that is a secure stop of the robot with a simple and rapid restart possibility. The protection stop implies that the production unit that is the robot is provided with brakes, which brake down the system. The third stop function is emergency stop, where all power that can give dangerous funnction is cut off. In this case there are no requirements on rapid and simple restart.

Several different types of protection devices, eg. limit protection and surface protection provides different types of stop functions. A production stop may eg. change to a protection stop if someone opens a prelocked protection gate.

### Technical problem

To avoid accidents at welding with a robot protection devices are demanded corresponding to the second stop function level which has been shown above which automatically stops the robot if someone walks close to the same. This form of stop also interrupts the welding going on. At seam welding this weld has to be redone, which causes undesired production disturbances.
In the control program of a robot there is written when a production stop is allowed, that is the parts in the program when production stops may take place without risks for damages on the machine or product. To this input of the computer of the robot a switch, a central computer or a control from another machine may be connected. On the outputs of the computer of the robot there are signals partly to stop other machines in a controlled manner and partly to give information that the robot now has stopped in a good position with respect to restarting. Said information which originates from the software implies clearance signal for a protection stop.
The robot is stopped by means of the protection surrounded by it. It may comprise components as light bar, limit switches, holding apparatus, protection mat and gate with switch. When for example a gate is opened, an electric switch is actuated, which triggers a protection stop which means that the voltage to the robot is disconnected and the shafts fixed and braked.

The risks for accidents which exist are above all when the robot moves between two welding spots.
The invention is based on the following observation: When the robot is welding it is rather harmless since the welding itself is a slow process. It is of great importance that the robot always completes the weld which has been started. By sensing when current passes this low velocity movement of the robot can be allowed. This implies that a opened gate which breaks the power to the robot is connected such that this is only done when the robot does not perform a welding operation.
Thus the robot is allowed to continue welding according to the program if someone has passed into the risk area and protection stopped as soon as the welding operation is ready in response to the sensed welding current and independent of the output signal obtained from the computer which means clearance signal for protection stop which has been described above.

### The object of the invention

The object of the invention is to provide a reliable safety structure, where the mode of operation of the robot independently of its control program actuates the protection function in such a way that operations at low velocity e.g. maximum allowed welding velocity is maximized in time and where several machines and protection functions may be connected together.

### Description of the drawings

The invention will be described in closer detail in an embodiment with reference to the drawings in which
Fig. 1 shows a plan view over a working area within which a robot is active;
Fig. 2A shows a safety circuit which is used i connection with the present invention comprising a safety module and a protection circuit;
Fig. 2B shows a safety circuit provided with a detector for low velocity movement according to the invention and combined with a protection module and
Fig. 3 shows a block diagram over complete safety system for a welding robot on which the present invention is applied.

### Description of embodiments

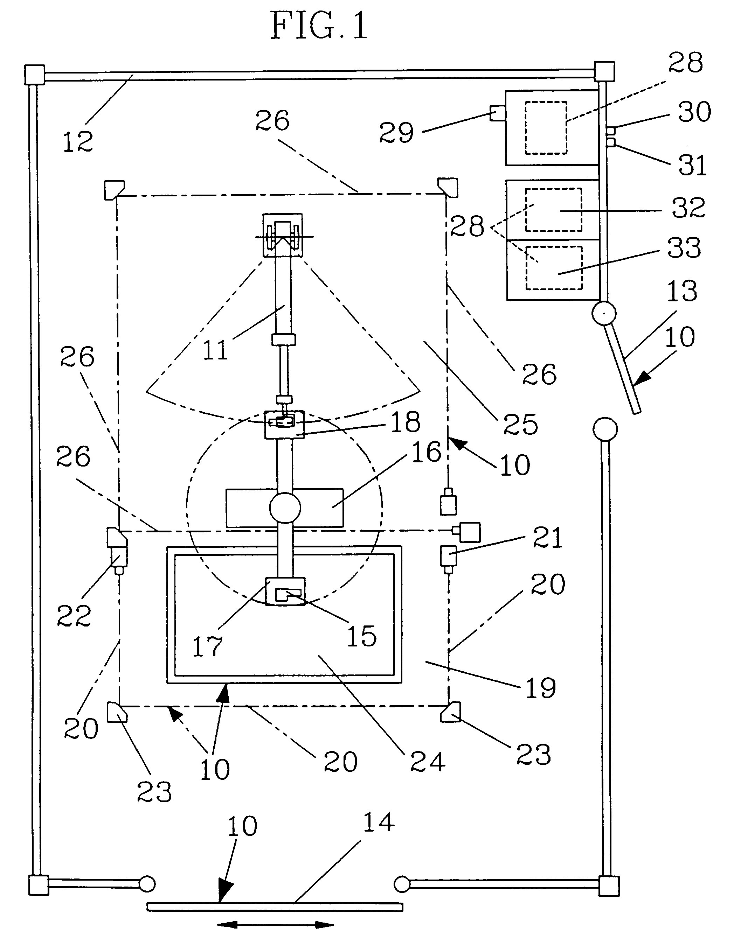

Fig. 1 shows an example on a working area for a robot 11 surrounded by different protection devices 10. The outermost protection device 10 is constituted by a fence 12, in which is arranged a gate 13 and a door 14, through which the objects 15 are transported, which are to be machined by the robot 11. With 16 is designated a station changer, which is provided with two positioners 17 and 18, which can be brought to change position. On one of the positioners 17 is placed - mounted - a workpiece 15, which working operation is carried out within a sevice area 19, which is limited by a light beam 20, which is generated by a light source 21 and detected by a photodetektor 22 via mirrors 23. Inside the light beam 20 is provided a contact mat 24, which is also included in the safety system.

The robot itself is situated within a machining area 25, which is surrounded by a light curtain 26. Inside the fence 12 is also provided a control unit 27, which contains a number of protection modules 28 corresponding to the number of protection devices 10 contained in the protection system. The control unit may also contain a three position holding apparatus 29 and outside the fence a start switch 30 and a re-setting device 31. Inside the fence is further provided a robot control unit 32, which comprises a computer, which controls the operating program of the robot and possibly a process unit for controlling the working process.

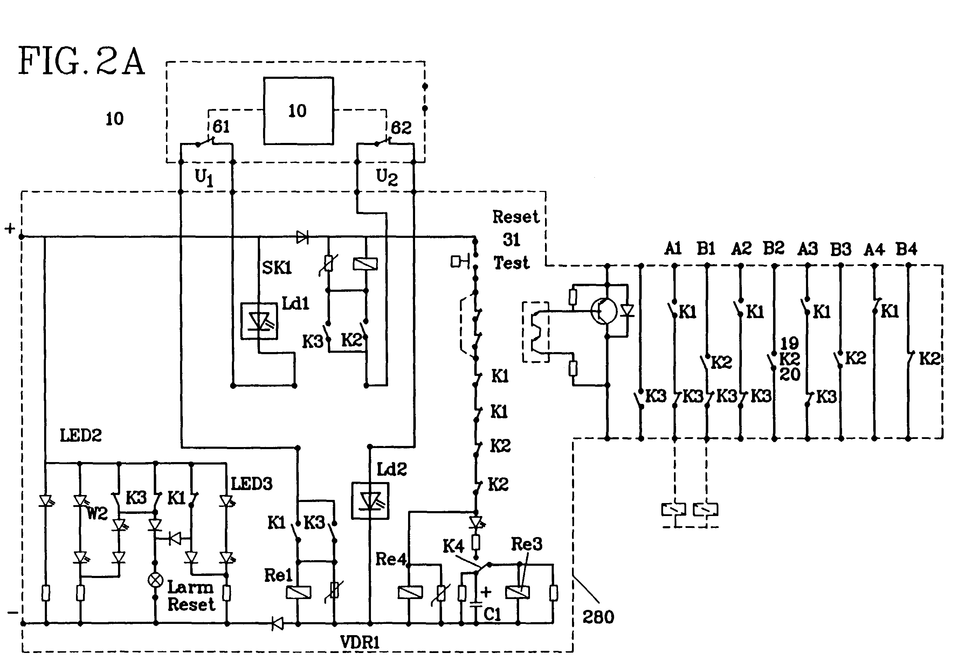

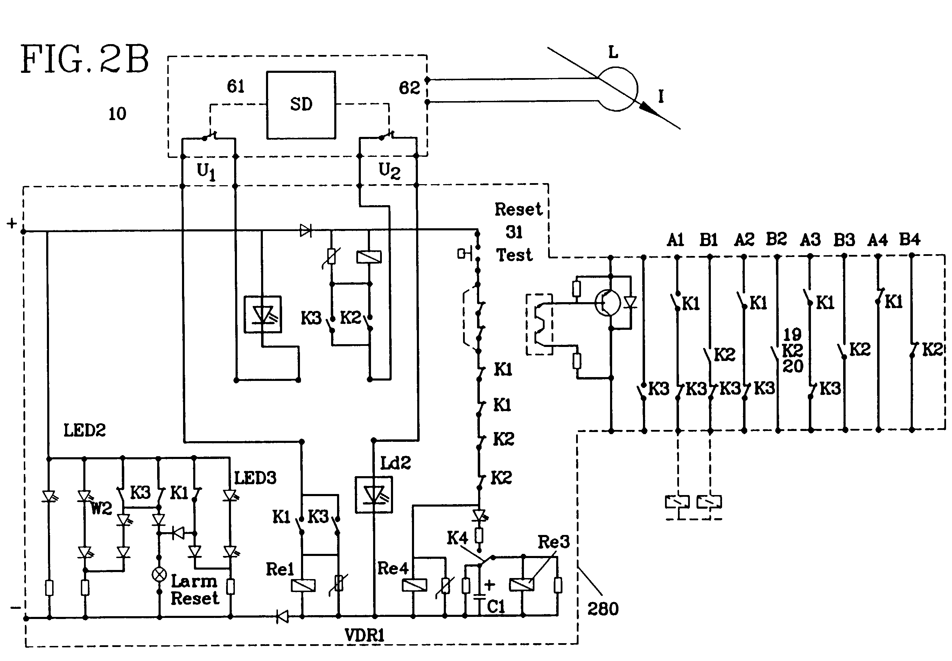

The fence defines the outer protection boundary and if the gate 13 or the door 14 is opened two switches b1 and b2 (fig.2) are actuated so that doubled protection circuits Sk1 and Sk2 are broken and a controlled production stop is initiated. In the computer program of the robot is written how a stop can occur without a risk for damages on machine or product. Normally a production stop implies that the working process, eg. a welding process is completed before a stop is allowed.
A protection stop is triggered even if the light bar 20 is passed and the contact mat is tread on. This protection function stops the movable unit within this area, that is in fig. 1 the station changer 16. As long as the operator is located inside this risk area, that is on the contact mat 24 the positioners 17 and 18 should not be able to change positions. When passing the light curtain 26, that is when entering the machining area 25, a protection stop is triggered, which stops the whole production section. By means of a holding apparatus 29 the stop functions can be disconnected, for example to find out reasons for operation disturbances, to study the production cycle or the like.

Each protection device 10, that is the gate 13, the door 14, the contact mat 24, the light barrier and the light curtain arrangement 20, 26 and possibly holding apparatus 29, are connected each to its protection module 28.

With reference to fig 2A an example is shown on a wiring diagramfor a safety circuit, in which a protection circuit is connected to a safety module.
A protection circuit 100 is constituted by eg. a protection 5 device 10 such as a gate 13 which mechanically actuates the breakers bl and b2 through its movement. The protection circuit with its outputs u1 and u2 is connected to stop relay circuits Sk1 and Sk2 in the protection module 28.

To actuate the relays Re1 and Re2 in the stop relay circuits Sk1 and Sk2 the switches b1 and b2 on one hand have to be closed and the "input" to the re-setting device 31 on the other has to be both closed and opened. Not until then the doubled outputs A1 and B1 respectively A2 and B2 and so forth are closed. A short circuit between the connection blocks of the breakers b1 and b2 does not give any dangerous function. This implies that a fault only can lead to that an output does not break when the protection device gives a stop signal to the control unit. This fault also results in that the protection device can not be resetted again.

Ld1 and Ld2 are opto couplers which give stop signal before the relays Re1 and Re2 fall. This signal is coupled directly into the computer of the robot control unit 32 which computer has the opportunity to stop before Re1 and Re2 gives a stop. Re1 and Re2 can also be delayed in a simple way by connecting external capacitors.

With reference to Fig. 2B is shown a safety circuit which has been provided with a detector SD for the welding current I which passes through the welding spot. In one embodiment of the invention transformer coupling is used by means of a loop L to the detector SD.

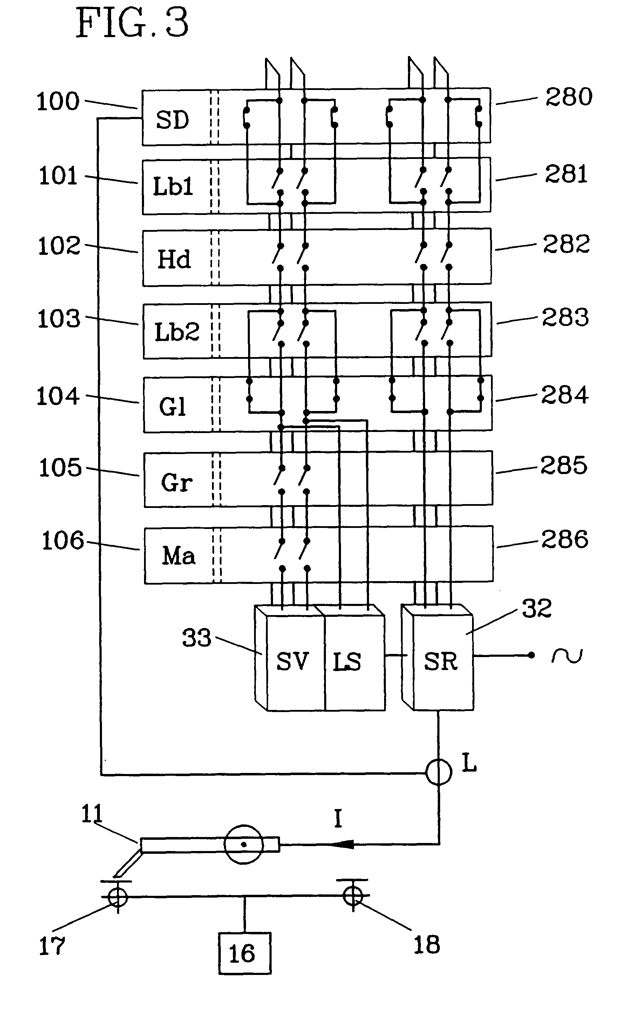

With reference to Fig 3 a complete safety system is shown, comprising a low velocity detector SD with corresponding protection circuit 100, light beam Lb1 corresponding protection circuit 101, holding apparatus Hd corresponding protection circuit 102, light beam Lb2 corresponding protection circuit 103, limit switch G1 corresponding protection circuit 104, gate Gr corresponding protection circuit 105 and contact mat Ma corresponding protection circuit 106. Normally all control passes through the control units 32 and 33 but at a stop signal from the protection device 10 the stop signal passes directly to the "dangerous" functions. Production stop can be used for information to the computer or for a rapid stop signal. Production stop is a possible supplement in the modules.

The outputs from respective chain of switches formed by the protection modules 280 - 286 are here connected on one hand to electrically controlled valves and on the other to the voltage supply to electric motors for driving the welding robot.

## Claims

1. Method to supervise stages at industrial production carried out by an automatic equipment (11) at a protected working station (16), whereby at least one stage is performed at a very low velocity with small accidental risks for a person present in the working area (25) of the equipment,
**characterized therein,**
that when an existing protection device (10) is actuated, said equipment proceeds with the operation being performed if the operation occurs at a safe low velocity, detected by means of a velocity detector (100), whereby a safety system gives a secure stop, when:
- the operation is terminated; or
- the velocity increases above a defined limit value.

2. A device for performing the method according to claim 1, comprising an automatic equipment (11) at a protected working station (16)
**characterized therein,**
that a control unit (32) of said automatic equipment is connected to a safety system comprising a low velocity detector (100) connected to external sensing means for detecting a low safe operation velocity at a defined operation whereby the safety system gives a secure stop, when:
- the operation is terminated ; or
- the velocity increases above a defined limit value.

3. Device according to claim 2,
**characterized therein,**
that said defined operation is welding and that said sensor means detects supplied welding current.

4. Device accoprding to claim 2,
**characterized therein,**
that said defined operation is cutting machining such as milling and that the sensor means detects that the tool is in engagement with a workpiece.

## Patentansprüche

1. Verfahren zur Überwachung von industriellen Produktionsabschnitten, welche durch ein automatisches Gerät (11) an einer geschützten Arbeitsstation (16) ausgeführt werden, wobei mindestens ein Abschnitt mit einer sehr niedrigen Geschwindigkeit mit einem geringen Unfallrisiko für eine im Arbeitsbereich (25) des Gerätes befindliche Person ausgeführt wird,
**dadurch gekennzeichnet,**
daß bei Betätigung einer vorhandenen Schutzvorrichtung (10) besagtes Gerät den ausgeführten Arbeitsvorgang fortsetzt, falls dieser Vorgang mit einer von einem Geschwindigkeitsmesser (100) ermittelten sicheren geringen Geschwindigkeit abläuft, wobei ein Sicherheitssystem einen Sicherheitsstopp auslöst, wenn:
- der Arbeitsvorgang beendet ist; oder
- die Geschwindigkeit einen festgelegten Grenzwert überschreitet.

2. Eine Vorrichtung zur Ausführung des Verfahrens gemäß Anspruch 1, mit einem automatischen Gerät (11) an einer geschützten Arbeitsstation (16)
**dadurch gekennzeichnet,**
daß ein Steuerteil (32) des genannten automatischen Gerätes mit einem Sicherheitssystem verbunden ist, welches aus einem mit einem Außensensor zur Ermittlung einer geringen sicheren Arbeitsgeschwindigkeit für einen bestimmten Arbeitsgang angeschlossenen Niedriggeschwindigkeitsmesser (100) besteht, wobei das Sicherheitssystem einen Sicherheitsstopp auslöst, wenn:
- der Arbeitsvorgang beendet ist; oder
- die Geschwindigkeit einen festgelegten Grenzwert überschreitet.

3. Vorrichtung gemäß Anspruch 2,
**dadurch gekennzeichnet,**
daß der genannte bestimmte Arbeitsgang ein Schweißvorgang ist und daß der genannte Sensor den eingespeisten Schweißstrom ermittelt.

4. Vorrichtung gemäß Anspruch 2,
**dadurch gekennzeichnet,**
daß der genannte bestimmte Arbeitsgang spanabhebendes Schneiden wie Fräsen ist und daß der Sensor feststellt, daß das Arbeitsgerät ein Werkstück bearbeitet.

## Revendications

1. Procédé pour surveiller des étapes de production industrielle mises en oeuvre par un équipement automatique (11) sur un poste de travail protégé (16), dans lequel au moins une étape est réalisée à une très faible vitesse avec de faibles risques d'accidents pour une personne présente dans la zone de travail (25) de l'équipement, caractérisé par le fait que, lorsqu'un dispositif de protection existant (10) est actionné, ledit équipement continue l'opération en cours si cette opération a lieu à une faible vitesse n'entraînant pas de risques qui est détectée au moyen d'un détecteur de vitesse (100), un système de sécurité produisant un arrêt de sécurité lorsque :
- l'opération est terminée ; ou :
- la vitesse augmente au-dessus d'une valeur limite définie.

2. Dispositif pour mettre en oeuvre le procédé selon la revendication 1, comprenant un équipement automatique (11) et un poste de travail protégé (16) et caractérisé par le fait qu'une unité de commande (32) dudit équipement automatique est reliée à un système de sécurité comprenant un détecteur de faible vitesse (100) qui est relié à des moyens de captage extérieurs pour détecter une faible vitesse de fonctionnement n'entraînant pas de risques pour une opération définie, le système de sécurité produisant un arrêt de sécurité lorsque :
- l'opération est terminée ; ou :
- la vitesse augmente au-dessus d'une valeur limite définie.

3. Dispositif selon la revendication 2, caractérisé par le fait que ladite opération définie est un soudage, et que lesdits moyens de captage détectent le courant de soudage qui est fourni.

4. Dispositif selon la revendication 2, caractérisé par le fait que ladite opération définie est un usinage par enlèvement de copeaux comme le fraisage, et que les moyens de captage détectent le fait que l'outil est en prise avec une pièce.
